Europäisches Patentamt

European Patent Office

Office européen des brevets

(11) Publication number: **0 337 646**
**A2**

## (12) EUROPEAN PATENT APPLICATION

(21) Application number: 89303345.6

(22) Date of filing: 05.04.89

(51) Int. Cl.⁴: **H02K 1/28 , H02K 1/24 , H02K 5/173**

(30) Priority: 15.04.88 GB 8808966

(43) Date of publication of application:
18.10.89 Bulletin 89/42

(84) Designated Contracting States:
DE FR GB IT

(71) Applicant: LUCAS INDUSTRIES public limited company
Great King Street
Birmingham, B19 2XF West Midlands(GB)

(72) Inventor: Crickmore, Terence Leonard
4 Windermere Close Leverstock Green
Hemel Hempstead Hertfordshire, HP3 8QN(GB)
Inventor: Schofield, Clifford Raymond
20 Woodland Rose
Studham Bedfordshire LU6(GB)

(74) Representative: Healy, Cecilia Patricia et al
33 Prince of Wales Road
Coventry CV5 8GR(GB)

(54) Rotor assembly for a dynamo electric machine and dynamo electric machine.

(57) A rotor assembly (19) for a dynamo electric machine is of a type comprising a rotor body (30) of magnetizable material and a supporting non-magnetic sleeve (40) surrounding and frictionally engaging said rotor body (30), the sleeve (40) having at its respective ends means for engaging supporting bearings (46, 47). The sleeve (49) is open at one of its ends (36) and the internal diameter of this one end is such as to permit the rotor body (30) to pass axially through this one end, the sleeve (40) being shrink fitted after heating. The dynamo electric machine including the rotor has large diameter supporting bearings (47) positioned axially close to the rotor. A shaft (12) is integral with, or welded to the rotor sleeve (40) at a conically tapered transitional portion (42). The machine is suitable for high speeds of revolution.

FIG. 1

## ROTOR ASSEMBLY FOR A DYNAMO ELECTRIC MACHINE AND DYNAMO ELECTRIC MACHINE

This invention relates to a rotor assembly for a dynamo electric machine and to a dynamo electric machine.

It is known to support a magnetizable rotor body of a dynamo electric machine within an external sleeve of material of low magnetic permeability, rather than on a central shaft and the invention relates to the mounting of a rotor in this manner.

In US Patent 4139789 to Hunt there is described a magnetizable rotor body supported within a non-magnetic sleeve, the ends of the sleeve being rotatably supported in a fixed part of the machine. The sleeve is a tight frictional fit on the rotor body, this fit being obtained by shrinkage of the sleeve after heating. The frictional fit between the rotor body and the sleeve enables the latter to transmit sufficient driving torque to the body. The sleeve is provided with stepped end portions which are either integral with the remainder of the sleeve or welded thereto.

It is a disadvantage of such a construction that the welding must be carried out after the rotor body has been located within the sleeve. Damage to thermally sensitive parts within the sleeve may therefore result during welding. Additionally, the welds cannot be properly inspected.

It is a further disadvantage of such a construction that it is difficult to separate the rotor body and its associated wiring from the sleeve without damage to the body and wiring. U.S. Patents 4510679 and 4598218 to Aleem et al teach a rotor construction which will enable parts of the sleeve to be cut away from the rotor body and from its end portions. The construction and method taught by Aleem et al result in the sleeve and both of its end portions becoming unusable.

Still another disadvantage is that the ends of the prior art rotor assemblies have portions of reduced diameter which project from a radial transverse end face, the bearings also being of reduced diameter. The rotor of Aleem has these reduced diameter portions in the form of stub shafts.

A rotor of the type taught by Aleem and as envisaged by the present invention may be intended for use at high speed, for example in a 400 Hz aircraft alternator, where the rotor is required to operate at typically 24,000 rpm.

At such a speed, the forces arising from out of balance masses or unbalanced magnetic pull are considerable. Rotary oscillations due to such imbalance may cause severe problems at a critical speed where they equal a natural resonant frequency of the assembly. Critical speed resonance problems may be aggravated by the change of configuration from a sleeve through a radial face to a smaller diameter shaft.

The present invention provides a sleeved rotor assembly and a dynamo electric machine in which some or all of the foregoing problems are overcome or reduced.

According to the invention there is provided a rotor assembly for a dynamo electric machine comprising a rotor body of magnetizable material and a supporting non-magnetic sleeve surrounding and frictionally engaging said rotor body, said sleeve having at its respective ends means for engaging supporting bearings, said sleeve being open at one of its ends and the internal diameter of said one end being such as to permit said rotor body to pass axially through said one end.

The sleeve may be a shrink fit on the rotor body.

The sleeve may be devoid of any radial, transverse face.

Preferably said other end of the sleeve is of conically tapering form.

Said other end may be formed integrally with a shaft. Alternatively said other end may have a shaft secured thereto by welding.

According to a further aspect of the invention there is provided a dynamo electric machine including a rotor assembly as set out above, and supporting bearing means for each end of the assembly.

At least the one supporting bearing means adjacent said one end of the sleeve may be of a diameter approximately equal to the diameter of the sleeve.

Said one supporting bearing means may be positioned at a minimum axial spacing from said one end of the rotor.

Said one supporting bearing means may include thrust bearing means resistant to axial forces in both axial directions.

An embodiment of the invention will now be described in more detail with reference to the accompanying drawings, in which:-

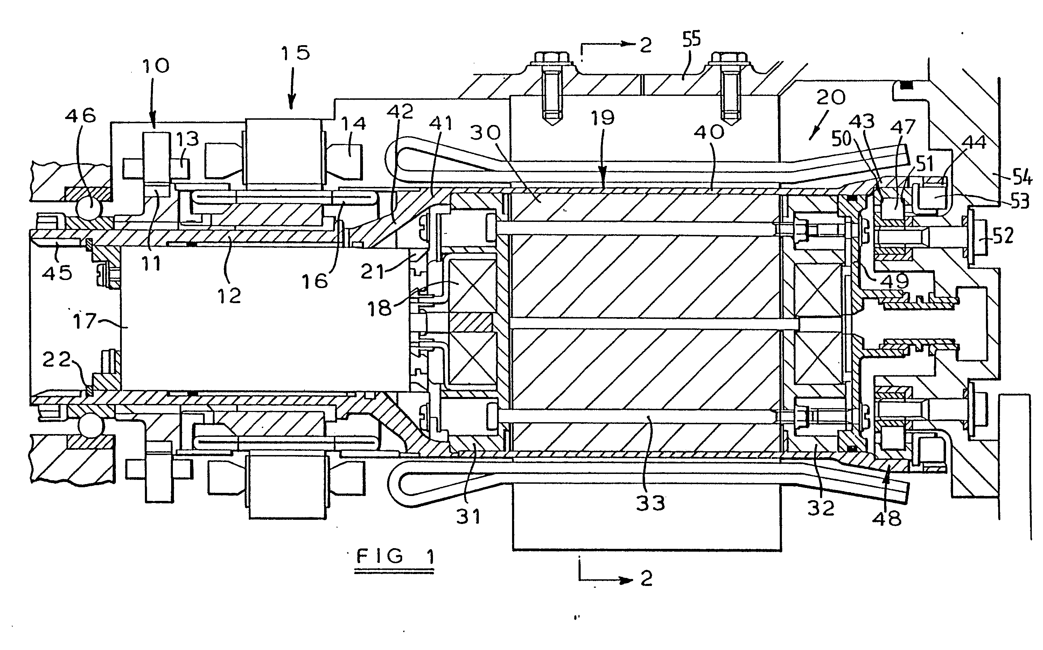

FIGURE 1 is a diagrammatic cross-section through a brushless electric generator incorporating a rotor assembly embodying the invention;

FIGURE 2 is a transverse section through the rotor assembly on the line 2-2 of Figure 1.

A generator shown in the drawings includes a permanent magnet alternator 10 having a rotor 11 mounted on an annular non-magnetic shaft 12, the rotor 11 co-operating with a stator coil 13. A stator 14 of an exciter alternator 15 is energized from the stator coil 13 to induce alternating current in rotor winding 16, also mounted on the shaft 12. A cylindrical container 17 is mounted within the shaft 12 and carries a rectifier arrangement (not shown) of a known type, rectified current from the winding 16 being supplied to a winding 18 of a rotor assembly 19 in a main alternator 20.

The container 17 drivingly engages the rotor assembly 19 by way of dogs 21, and is urged into driving engagement by a spring ring 22. The shaft 12 is provided with internal splines 45 by means of which a drive may be applied to the rotor assembly 19 and shaft 12.

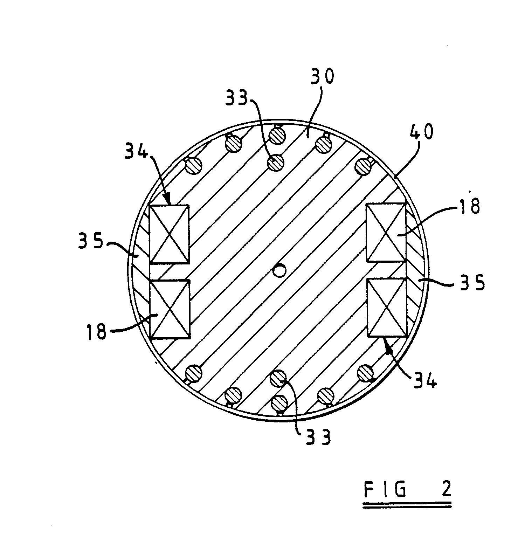

The rotor assembly 19 includes a laminated soft iron body 30, coil support blocks 31, 32 being secured to opposite ends of the body 30 via through bolts 33. The winding 18 lies in axially extending, diametrally opposed grooves 34 in the body 30 and is located and supported in the blocks 31, 32 at the ends of the assembly 19. As shown in Figure 2, the axially extending portions of the winding 18 are secured in the grooves 34 by clamps 35 which, in their clamping positions, present outer surfaces contiguous with the cylindrical surface of the rotor body 30.

A sleeve 40 of non-magnetic nickel cobalt alloy has a cylindrical portion which is a shrink fit on the body 30 and the blocks 31, 32. The ends of the sleeve 40 have no radial parts. One end 41 of the sleeve 40 is integral with a conically tapering transitional portion 42 of the annular shaft 12. The other end 43 of the sleeve 40 is tapered outwardly and has threads 44 to receive a locknut 53.

The rotor assembly 19 and container 17 are inserted into the sleeve 34 and shaft 12. The container 17 is a close sliding fit in the shaft 12 by the rotor assembly is a tight frictional shrink fit in the sleeve 40. To achieve this tight shrink fit, the sleeve 40 is raised to a temperature of 400°C, before the rotor assembly is slid in, to allow subsequent shrink fitting of the sleeve 40 to the body 30 on cooling. For service or repair, the container 17 and assembly may again be withdrawn through the end 43. Thus no cutting is required to remove the rotor assembly and all parts remain capable of re-use.

A bearing 46 engages the shaft 12 and a bearing 47 engages a cylindrical surface 48 at the end 43 of the sleeve 40, the surface 48 having a diameter at least as large as that of the circumference of the body 30.

The bearing 47 has a minimum axial distance from the adjacent end of the body 30, consistent with clearing the block 32 and a diaphragm 49 which prevents escape of cooling fluid from the rotor. Minimising this axial distance improves the stiffness of the assembly as a whole and reduces risk of resonance taking place at a critical speed within the range of rotational speeds of the assembly. The inner surface of the transitional portion 42 of the shaft 12 has an included angle of about 70°, thereby tending further to stiffen the assembly and avoiding the use of a radial transverse wall. This again reduces risk of critical speed resonance.

The bearing 47 is a roller bearing which lies between shoulders 50, 51, to form a thrust bearing resisting axial loading in both axial directions. The bearing assembly is mounted by screws 52 and a lock nut 53 to an end cover 54, itself secured to a main generator housing, part of which is shown at 55. The removal of the end cover 54 from the main housing 55 enables the whole winding assembly, that is the sleeve, the shaft and the enclosed rotor assembly and rectifier, to be removed from the housing intact, for subsequent removal of the sleeve for maintenance or repair as previously described, or to enable the windings to be flushed with oil to remove debris from cooling passageways (not shown) in the windings.

As an alternative, the sleeve 40 and shaft 12 may be fabricated separately, the end 41 of the sleeve 40 being subsequently welded to the transitional portion 42. The welds may be inspected internally and externally and the sleeve may be heat treated before the sleeve 40 is shrink fitted to the body 30.

## Claims

1. A rotor assembly for a dynamo electric machine comprising a rotor body of magnetizable material and a supporting non-magnetic sleeve surrounding and frictionally engaging said rotor body, said sleeve having at its respective ends means for engaging supporting bearings,
**characterised in that**
said sleeve (40) is open at one of its ends (36) and the internal diameter of said one end is such as to permit said rotor body (39) to pass axially through said one end (36).

2. A rotor assembly according to claim 1 further characterised in that the sleeve (40) is a shrink fit on the rotor body (30).

3. A rotor assembly according to claim 1 or claim 2 further characterised in that the sleeve (40) is devoid of any radial, transverse face.

4. A rotor assembly according to any preceding claim further characterised in that said other end (42) of the sleeve is of conically tapering form.

5. A rotor assembly according to any preceding claim further characterised in that said other end (42) is formed integrally with a shaft (12).

6. A rotor assembly according to any one of claims 1 to 4 further characterised in that said other end (41) has a shaft secured thereto by welding.

7. A dynamo electric machine comprising, in combination, a rotor assembly (19) according to any one of claims 1 to 6 and supporting bearing means (46, 47) for each end of the assembly.

8. A dynamo electric machine according to claim 7 further characterised in that at least the one supporting bearing means (47) adjacent said one end of the sleeve is of a diameter approximately equal to the diameter of the sleeve (40).

9. A dynamo electric machine according to claim 8 further characterised in that said one supporting bearing means (47) is positioned at a minimum axial spacing from said one end of the rotor.

10. A dynamo electric machine according to any one of claims 7 to 9 further characterised in that said one supporting bearing means (47) includes thrust bearing means (47, 50, 51) resistant to axial forces in both axial directions.

11. A dynamo electric machine according to any one of claims 7 to 10 further characterised in that the machine has a main housing (55) and an end plate (54) removably secured to the housing (55), the supporting bearing means (47) and hence the rotor assembly (19) being secured to the end plate (54)for removal from the housing therewith.

FIG 1

EP 0 337 646 A2

FIG 2